# EUROPÄISCHE PATENTSCHRIFT

(11) **EP 0 380 009 B1**
(45) Veröffentlichungstag und Bekanntmachung des Hinweises auf die Patenterteilung: **29.03.1995**
(21) Anmeldenummer: 90101154.4
(22) Anmeldetag: 20.01.1990
(51) Int. Cl.: C09D 5/44

(54) **Hitzehärtbares Überzugsmittel für die kathodische Elektrotauchlackierung**
Heat-curable coating composition for cathodic electrodeposition
Composition de revêtement thermodurcissable pour l'électrodéposition cathodique

(30) Priorität: 27.01.1989 DE 3902441
(43) Veröffentlichungstag der Anmeldung: 01.08.1990
(73) Patentinhaber: BASF Lacke + Farben AG, 48165 Münster-Hiltrup (DE)
(72) Erfinder: Schupp, Hans, Dr., D-6520 Worms 1 (DE); Schwerzel, Thomas, Dr., D-6701 Meckenheim (DE); Huemke, Klaus, Dr., D-6700 Ludwigshafen (DE); Faul, Dieter, Dr., D-6702 Bad Duerkheim (DE)

(56) Entgegenhaltungen:
- EP-A- 0 167 029
- EP-A- 0 220 440
- EP-A- 0 319 834
- AT-B- 381 500
- DE-A- 3 630 667

## Beschreibung

Die Erfindung betrifft Überzugsmittel für die kathodische Elektrotauchlackierung, die eine durch Protonieren mit Säuren wasserverdünnbare organische Kunstharzkomponente, einen wasserverdünnbaren Vernetzer sowie gegebenenfalls Pigmente, Füllstoffe, übliche Lackhilfsmittel und in einer Menge bis zu 20 Gew.-%, bezogen auf das Gesamtgewicht des Überzugsmittels, organische Lösungsmittel enthalten.

Die meisten der heute gebräuchlichen Elektrotauchlacke mit hohem Umgriff und gutem Korrosionsschutz bestehen aus Amino-Epoxidharzen, wie sie z.B. in der DE-OS 34 22 457 oder DE-OS 33 25 061 oder DE-OS 34 44 110 beschrieben werden. Zu diesem Epoxidharz wird üblicherweise ein Vernetzer in organischer Lösung zugemischt, anschließend wird die Mischung protoniert und in Wasser dispergiert. Nach der Abscheidung auf Blechen erfolgt eine thermische Vernetzung der Bindemittel bei Einbrenntemperaturen von 160 bis 200°C.

Ein Nachteil dieses Verfahrens besteht in den eingeschränkten Herstellbedingungen. Das Bindemittel wird üblicherweise bei höheren Temperaturen, in der Regel bis zu 120°C, hergestellt und direkt nach der Herstellung mit dem Vernetzer während der Abkühlungsphase bei höheren Temperaturen gemischt, bevor die Dispergierung erfolgt. Dadurch besteht die Gefahr einer vorzeitigen Reaktion des Bindemittels mit dem Vernetzer, vor allem, wenn es aufgrund produktionsbedingter Störungen zu einer längeren Verweildauer in dem Reaktor bei Temperaturen von z.B. 50 - 70°C kommt. Daher wird das Bindemittel so weit abgekühlt, daß eine solche Reaktion nur in untergeordnetem Maße stattfindet. Dieses Verfahren bedeutet in der Praxis allerdings eine sehr lange Abkühlzeit. Weiterhin wird die Zeit zwischen dem Mischen und dem Dispergierprozeß möglichst kurz gehalten. Auch diese Maßnahme ist aus produktionstechnischen Gründen nicht immer reproduzierbar einzuhalten, so daß es in der Praxis zu Schwankungen von Charge zu Charge kommen kann.

Ein weiterer Nachteil des oben erwähnten Verfahrens besteht in einer mangelnden Variabilität der Elektrotauchlackzusammensetzung. Die Menge des Vernetzers z.B. beeinflußt so wichtige Eigenschaften des Filmes wie Vernetzungsdichte, Härte und Sprödigkeit des eingebrannten überzugs, Lösemittelfestigkeit und Korrosionsschutz, um nur einige zu nennen. Auch über die Art des Vernetzers lassen sich viele Eigenschaften steuern. Durch die Zugabe des Vernetzers zu dem Bindemittel vor der Dispergierung ist jedoch das Mischungsverhältnis und die Art des Vernetzers von vornherein festgelegt. Für jede Änderung der Zusammensetzung oder der Mengenverhältnisse ist eine neue Produktion des gesamten Systems erforderlich.

Eine weitere Einschränkung des oben erwähnten Verfahrens betrifft die Einbrenntemperaturen. Einbrenntemperaturen in einem Bereich von 160 bis 200°C sind im Prinzip unvorteilhaft. Einmal ist der Energiebedarf bei solch hohen Temperaturen sehr beträchtlich, da die gesamte Karosserie auf diese Temperatur aufgeheizt werden muß. Zudem zeigen die meisten Vernetzer auf Basis aromatischer Isocyanate, insbesondere auf Basis von Toluylendiisocyanat, bei diesen Temperaturen eine starke Neigung zur Vergilbung, wobei die Gefahr besteht, daß diese Vergilbung auch im Decklack zu sehen ist. Weiterhin werden in der Automobilindustrie in zunehmendem Maße Kunststoffteile im Karosseriebau verwendet, deren Maßhaltigkeit bei solch hohen Temperaturen nicht mehr gewährleistet ist.

Es hat daher nicht an Versuchen gefehlt, die Einbrenntemperatur von Elektrotauchlacken zu senken. In der EP-A-208 867 und in der EP-A-220 440 werden dazu Isocyanatvernetzer eingesetzt, deren Isocyanatgruppen über Malonestergruppen blockiert sind. Malonester sind als Blockierungsgruppen mit low-bake-Charakter bekannt, man erreicht damit Einbrenntemperaturen bis zu 120°C herunter. In der US 4 659 770 wird ein Acrylat-Bindemittel, das primäre Aminogruppen enthält, mit einem Vernetzer aus einem aliphatischen Isocyanat, dessen Isocyanatgruppen mit Ketoxim oder Malonester geblockt sind, in organischer Lösung gemischt. Eine Härtung erfolgt bei 60 bis 90°C. Alle diese Systeme zeigen zwar low-bake-Charakter, ihre Lagerstabilität ist aber begrenzt. Insbesondere für den Fall der Elektrotauchlackierung, bei dem die wäßrige Dispersion über Wochen bei ca. 30°C gerührt wird und dabei keine vorzeitige Reaktion zeigen darf, sind solche Kombinationen unbrauchbar.

In der DE-OS 36 30 667 wird ein Verfahren beschrieben, das die oben genannten Nachteile vermeidet. Dabei wird zunächst ein Bindemittel durch eine Elektrotauchlackierung aufgebracht, anschließend wird als separater Vernetzer ein freies Isocyanat aus organischer Lösung aufgebracht. Dieses Verfahren ist unwirtschaftlich und nicht praktikabel. Einmal benötigt man große Mengen an Lösungsmittel, um den Vernetzer aufbringen zu können, zum anderen liegt ein Vorteil der Elektrotauchlackierung gerade darin, daß Hohlräume und andere durch konventionelle Auftragstechniken nicht erreichbare Flächen bedeckt werden können. In diese Bereiche kann aber der Vernetzer nicht vordringen, so daß hier keine Härtung erfolgen kann.

Es besteht daher ein Bedarf an Verfahren, die es gestatten, Elektrotauchlacke herzustellen, die bei 30°C lagerstabil sind, aber bei relativ niedrigen Temperaturen, beispielsweise bei 120 bis 140°C härten können.

Wasserlösliche oder wasserdispergierbare blockierte Isocyanate sind bekannt. So werden in der US 4 098 933 wasserlösliche oder wasserdispergierbare blockierte Isocyanate beschrieben, die durch Umsetzung von Isocyanaten mit Verbindungen erhalten werden, die Carboxylgruppen, Sulfonsäuregruppen, tertiäre Amine oder quartäre Ammoniumgruppen oder Polyalkylenoxide enthalten. Diese wasserlöslichen oder wasserdispergierbaren blockierten Isocyanate werden in wäßriger Lösung mit organischen Verbindungen mit mindestens zwei gegenüber Isocyanat reaktiven Wasserstoffatomen zur Herstellung flächiger Materialien verwendet. Eine Eignung dieser Isocyanate als Vernetzer für die Bindemittel in kathodischen Elektrotauchlacken ist dieser Schrift nicht zu entnehmen.

Aufgabe der vorliegenden Erfindung war es, Elektrotauchlack-Bäder zu entwickeln, die bei der Lagerung über Wochen stabil sind, aber nach der Abscheidung innerhalb kurzer Zeit bei niedrigen Temperaturen aushärten können.

Aufgabe war es weiterhin, ein Verfahren zu entwickeln, das hinsichtlich der Produktionssicherheit eine deutliche Verbesserung gegenüber dem Stand der Technik bringt und durch das teure Fehlchargen vermieden werden können. Ferner bestand die Aufgabe darin, ein Verfahren zu finden, das Änderungen in der Zusammensetzung des Elektrotauchlackes in dem fertigen Bad erlaubt.

Diese Aufgabe konnte gelöst werden durch ein hitzehärtbares, kathodisch abscheidbares wäßriges Elektrotauchlack-Überzugsmittel, enthaltend
(A) 50 bis 95 Gew.-% eines durch Protonieren mit Säure wasserverdünnbaren Polymerisations-, Polykondensations- oder Polyadditionsproduktes mit einem mittleren Molekulargewicht von 200 bis 20 000 mit primären und/oder sekundären Hydroxylgruppen und primären, sekundären und/oder tertiären Aminogruppen und
(B) 5 bis 50 Gew.-% eines wasserverdünnbaren Vernetzers mit einer tertiären Aminogruppe, einer quartären Ammoniumgruppe, einer Phosphoniumgruppe oder einer Sulfoniumgruppe, ausgenommen phenolische Mannichbasen mit freien phenolischen Hydroxylgruppen aus einem Phenol, Formaldehyd und einem sekundären aliphatischen Amin.

Weiterhin wurde diese Aufgabe gelöst durch ein Verfahren zur Herstellung eines hitzhärtbaren, kathodisch abscheidbaren Elektrotauchlack-Überzugsmittels, welches dadurch gekennzeichnet ist, daß man die Komponenten
(A) 50 bis 95 Gew.-% eines durch Protonieren mit Säure wasserverdünnbaren Polymerisations-, Polykondensations- oder Polyadditionsproduktes mit einem mittleren Molekulargewicht von 200 bis 20 000 mit primären und/oder sekundären Hydroxylgruppen und primären, sekundären und/oder tertiären Aminogruppen und
(B) 5 bis 50 Gew.-% eines wasserverdünnbaren Vernetzers mit kationischen Gruppen oder mit Gruppen, die durch Protonieren mit Säure in kationische Gruppen überführt werden können,
jeweils getrennt voneinander in Wasser dispergiert und die beiden Dispersionen zur Herstellung des Elektrotauchlack-Überzugsmittels mischt.

Zu den Aufbaukomponenten des überzugsmittels ist im einzelnen folgendes auszuführen:
Als Komponente (A) können auf diesem technischen Gebiet bekannte primäre und/oder sekundäre Hydroxylgruppen und primäre, sekundäre und/oder tertiäre Aminogruppen enthaltende Kunstharz-Bindemittel, mit einer mittleren Molmasse von 200 bis 20 000, wie Amino-Epoxidharze, Amino-Poly(meth)acrylatharze und/oder Amino-Polyurethanharze mit einer Aminzahl von 30 bis 150, verwendet werden. Der Einsatz von Amino-Epoxidharzen wird für Grundierungen mit hohem Korrosionsschutzniveau bevorzugt. Das Kunstharzbindemittel enhält mindestens eine Aminogruppe pro Molekül. Die untere Grenze der Aminzahl sollte bei 45, bevorzugt bei 70, die obere Grenze sollte bei 120, bevorzugt bei 100, liegen. Beispiele für Amino-Epoxidyharze sind Umsetzungsprodukte von epoxidgruppenhaltigen Harzen mit vorzugsweise endständigen Epoxidgruppen mit gesättigten und/oder ungesättigten sekundären und/oder primären Aminen bzw. Aminoalkoholen. Diese können am Alkylrest durch mindestens eine primäre und/oder sekundäre Hydroxylgruppe, durch die Mono- oder Dialkylaminogruppe und/oder durch eine primäre Aminogruppe, die durch Ketiminisierung vorübergehend geschützt wird, modifiziert sein.

Als Epoxidharze können beliebige Materialien verwendet werden, sofern sie ein mittleres Molekulargewicht von 300 bis 6000 und im Mittel 1,0 bis 3,0 Epoxidgruppen pro Molekül enthalten, vorzugsweise Verbindungen mit zwei Epoxidgruppen pro Molekül. Bevorzugt sind Epoxidharze mit mittleren Molekulargewichten von 350 bis 5000, insbesondere 350 bis 2000. Besonders bevorzugte Epoxidharze sind z.B. Glycidylether von im Mittel mindestens zwei phenolische Hydroxylgruppen im Molekül enthaltenden Polyphenolen, die sich in üblicher Weise durch Veretherung mit einem Epihalohydrin in Gegenwart von Alkali herstellen lassen. Aromatische Polyepoxide mit einem höheren Epoxidäquivalentgewicht können aus solchen mit einem niedrigeren Epoxidäquivalentgewicht und Polyphenolen hergestellt werden.

Das Einführen von Aminogruppen kann in einer der üblichen Reaktionen erfolgen, wie sie dem Fachmann geläufig sind und beispielsweise in EP 134 983, EP 165 556 oder EP 166 314 beschrieben sind.

Die Komponente (A) wird in Mengen von 50 bis 95 Gew.-%, bevorzugt 60 bis 80 Gew.-%, bezogen auf die Summe der Komponenten (A) und (B) verwendet.

Geeignete Ausgangsverbindungen zur Herstellung der Vernetzer (B) sind z.B. Aminoplastharze wie Harnstoff-Formaldehyd-Harze, Melaminharze oder Benzoguanaminharze, geblockte Isocyanatvernetzer, über Esteraminolyse und/oder Umesterung härtende Vernetzer, z.B. β-Hydroxyalkylester-Vernetzer gemäß der EP 40 867 und Carbalkoxymethylester-Vernetzer gemäß der DE 32 33 139. Weitere mögliche Vernetzer sind phenolische Mannich-Basen, wie sie z.B. in der DE 34 22 457 beschrieben sind.

Diese Vernetzer können allerdings nicht unmodifiziert eingesetzt werden, da sie nicht selbst dispergierbar sind. Daher müssen durch geeignete Modifikationen Gruppen eingebaut werden, die eine Dispergierung ermöglichen. Solche Gruppen sind z.B. tertiäre Aminogruppen, über die nach Protonieren mit Säure der Vernetzer wasserdispergierbar wird. Weiterhin sind quartäre Ammoniumgruppen für eine Dispergierung geeignet.

Als weitere Gruppierungen kommen Verbindungen mit quartären Phosphoniumgruppen und tertiären Sulfoniumgruppen in Frage.

Der Einbau von tertiären Aminogruppen oder quartären Ammoniumgruppen kann auf verschiedene Weise erfolgen. Man kann z.B. von Polyolen ausgehen, die tertiäre Aminogruppen enthalten und diese Polyole mit halbblockierten Diisocyanaten umsetzen. Auch die umgekehrte Herstellungsweise ist denkbar, nämlich eine Umsetzung von Diisocyanat mit tertiären Aminogruppen enthaltenden Polyolen in der Weise, daß im wesentlichen nur eine Isocyanatgruppe pro Molekül umgesetzt wird und anschließende Blockierung der zweiten Isocyanatgruppe. Als Polyol mit tertiären Aminogruppen kommen z.B. in Frage: Trishydroxyalkylamine wie Triethanolamin, Umsetzungsprodukte von Aminen mit Epoxiden oder Alkanolhalogeniden. Eine andere Möglichkeit ist der teilweise Ersatz des Isocyanat-Blockierungsmittels durch Verbindungen, die tertiäre Aminogruppen enthalten. So kann man in einen handelsüblichen Vernetzer aus einem Polyol und einem Diisocyanat 50 bis 90 % der freien Isocyanatgruppierungen verkappen. Die restlichen Isocyanatgruppen werden dann mit einem Alkohol oder Amin umgesetzt, das tertiäre Aminogruppen enthält. Dafür kommen z.B. Dimethylaminopropylamin oder Dimethylaminopropanol in Frage. Mit Dimethylaminopropylamin oder Dimethylaminopropanol halbseitig umgesetzte Diisocyanate eignen sich auch zur Modifizierung von OH-haltigen Vernetzern wie z.B. phenolischen Mannich-Basen, wobei ein Teil der Phenolgruppen durch diese Isocyanate umgesetzt werden kann. Quartäre Ammoniumgruppen lassen sich durch Umsetzung tertiärer Amine mit Alkylhalogeniden oder mit Epoxiden herstellen. So kann man z.B. Epikote® 828 (Firma SHELL) mit zwei Mol Methyldiethanolamin umsetzen und erhält ein Polyol mit Hydroxylgruppen, das zur Umsetzung von Isocyanaten dienen kann.

Weiterhin ist es möglich, Polyisocyanate mit epoxidhaltigen Verbindungen zu blockieren und die verbliebenen Epoxidgruppen mit freien tertiären Aminen zu quaternisieren.

Zum Einbau von Phosphoniumstrukturen kann man von phosphinhaltigen Isocyanaten ausgehen, die in an sich bekannter Weise zu Phosphoniumgruppen umgesetzt werden. Bevorzugt ist dabei die Umsetzung mit Monoepoxiden. Dabei kann die Reaktion so durchgeführt werden, daß zunächst ein hydroxygruppenhaltiges Phosphin mit Isocyanaten umgesetzt wird und anschließend mit Monoepoxid quaternisiert wird; bevorzugt ist jedoch die Umsetzung des Isocyanats mit epoxidgruppenhaltigen Verbindungen und anschließende Reaktion mit freiem Phosphin. Als Phosphine kommen z.B. in Frage Trialkylphosphine wie Triethylphosphin, Tributylphosphin oder Trioctylphosphin; Triarylphosphine wie z.B. Triphenylphosphin; Alkylarylphosphine und dergleichen. Als hydroxigruppenhaltiges Phosphin kann z.B. Trishydroxyethylphosphin dienen.

Die Herstellung von sulfoniumhaltigen Isocyanaten läßt sich auf ähnliche Weise durchführen. Man kann hydroxygruppenhaltige Sulfide mit Isocyanaten umsetzen und anschließend auf bekannte Weise in das Sulfoniumsalz überführen, wie z.B. in Houben-Weyl, Bd. E11 (Teil 1), s. 341 - 502, beschrieben ist. Weiterhin kann man epoxidgruppenhaltige Isocyanate mit freien Sulfiden umsetzen. Als Sulfide kommen in Frage Dialkylsulfide wie Diethylsulfid, Dibutylsulfid und höhere Sulfide, Diarylsulfide wie Diphenylsulfid, hydroxygruppenhaltige Sulfide wie Ethylmercaptoethanol oder Thiodiglykol u.a.

Im allgemeinen ist es ausreichend, nur 10 bis 50 %, bevorzugt 20 bis 45 % aller Vernetzermoleküle zu modifizieren, um eine genügende Dispergierbarkeit zu erzielen.

Wenn auch der Einsatz der neuen, erfindungsgemäßen Vernetzer in Form einer Dispersion bevorzugt ist, so können diese auch in einer konventionellen Art und Weise eingesetzt werden. So kann man die erfindungsgemäßen Vernetzer in organischer Lösung mit dem Bindemittel mischen, teilweise neutralisieren und anschließend dispergieren. Auch dabei bieten die erfindungsgemäßen Vernetzer einige Vorteile: Dispersionen mit aromatischen Vernetzern neigen relativ leicht zum Absetzen der Teilchen aus dem Bad. Durch Verwendung der erfindungsgemäßen Vernetzer wird die Neigung zum Absetzen deutlich verringert bzw. völlig unterdrückt. Weiterhin benötigt man im allgemeinen weniger Lösungsmittel, um den geforderten Verlauf und die notwendige Schichtdicke einzustellen.

Außer den bisher erwähnten Komponenten können weitere Stoffe wie Pigmente, Lackhilfsmittel, Lösemittel und Härterkatalysatoren zugesetzt werden. Die so hergestellten überzugsmittel können auch durch übliche Methoden auf Substrate wie Holz, Kunststoff oder Metall aufgebracht werden. Für die kathodische Elektrotauchlackierung wird das Kunstharz in Verbindung mit den genannten Zusatzstoffen durch Protonieren mit Säure in eine wasserlösliche Form überführt. Als Säuren werden bevorzugt Carbonsäuren wie Ameisensäure, Essigsäure oder Milchsäure verwendet, aber auch anorganische Säuren wie z.B. Phosphorsäuren können eingesetzt werden. Anschließend wird zu dieser Dispersion eine Dispersion des Vernetzers in dem gewünschten Verhältnis zugemischt. Es ist natürlich auch möglich, dem Vernetzer die genannten Zusatzstoffe zuzugeben und anschließend zu dispergieren.

Für die kathodische Elektrotauchlackierung wird im allgemeinen ein Feststoffgehalt des Elektrotauchbades von 5 bis 30 Gew.-% eingesetellt.

Die Abscheidung erfolgt üblicherweise bei Temperaturen zwischen 15 und 40°C während einer Zeit von 0,5 bis 5 min und bei pH-Werten zwischen 4,0 und 8,5, bevorzugt um den Neutralpunkt, bei Spannungen zwischen 50 und 500 V. Der zu beschichtende elektrisch leitende Körper wird dabei als Kathode geschaltet. Der abgeschiedene Film wird bei Temperaturen oberhalb 100°C ca. 20 min gehärtet.

### Beispiele

### Kunstharzbindemittel-Dispersion

In einem mit Wasserabscheider und Füllkörperkolonne versehenen Gefäß wurden 12440 g Hexamethylendiamin, 18660 g dimere Fettsäure (Pripol® 1013, Fa. Unichema), 3000 g Leinölfettsäure und 2566 g Xylol zur Reaktion gebracht. Binnen 3 bis 4 Stunden wurden 1150 g Wasser und 1750 g Xylol abdestilliert. Das Produkt hatte eine Aminzahl von 233 mg KOH/g.

In einem Reaktionsgefäß wurden 815 g eines Diglycidylethers aus Bis-(4-hydroxyphenyl)-2,2-propan (Bisphenol A) und Epichlorhydrin mit einem Äquivalentgewicht von 188, 214,4 g Bisphenol A und 53,6 g Propylenglykolmonophenylether mit 0,26 g Triphenylphosphin zur Reaktion gebracht. Bei einer Reaktionstemperatur von 130°C wurde nach 3 Stunden ein Produkt mit einem Epoxyäquivalentgewicht von 429 erhalten. Mit 302 g Isobutanol und 212,4 g Toluol wurde verdünnt und auf 60°C abgekühlt. Anschließend wurden 70,8 g Methylethanolamin und 351,6 g des o.a. Vorproduktes zugegeben und auf 80°C erhitzt. Nach 2 Stunden war kein Epoxid mehr nachweisbar. Das Kunstharz hatte eine Aminzahl von 105 mg KOH/g, einen Festkörpergehalt von 70 Gew.-% und eine Platte/Kegel-Viskosität von 4000 mPas bei 75°C.

137 g des o.a. Kunstharzbindemittels wurden mit 3,1 g Essigsäure versetzt. Anschließend wurde mit entionisiertem Wasser unter Rühren eine 35 gew.-%ige Dispersion hergestellt.

### Pigmentpaste

640 g eines Diglycidylethers auf Basis von Bisphenol A und Epichlorhydrin mit einem Epoxidäquivalentgewicht von 485 und 160 g eines solchen mit einem Epoxidäquivalentgewicht von 189 wurden bei 100°C gemischt. In einem weiteren Gefäß wurden 452 g Hexamethylendiamin vorgelegt, auf 100°C erhitzt und 720 g der obigen heißen Epoxidharzmischung innerhalb einer Stunde zugegeben, wobei leicht gekühlt werden mußte, um die Temperatur bei 100°C zu halten. Nach weiteren 30 Minuten wurde unter Temperaturerhöhung und vermindertem Druck das überschüssige Hexamethylendiamin abgezogen, wobei zum Schluß eine Temperatur von 205°C und ein Druck von 30 mbar erreicht wurde. Anschließend wurden 57,6 g Stearinsäure, 172,7 g dimere Fettsäure und 115 g Xylol zugesetzt. Dann wurde innerhalb von 90 min bei 175 bis 180°C das gebildete Wasser azeotrop abdestilliert. Anschließend wurden 58 g Butylglykol und 322 g Isobutanol zugefügt. Das Produkt hatte einen Feststoffgehalt von 70 Gew.-% und eine Viskosität, gemessen bei 75°C mit einem Platte-Kegel-Viskosimeter, von 2240 mPas.

110 g des so erhaltenen Kunstharzes wurden in einer Kugelmühle zusammen mit 36 g Ethylenglykolmonobutylether, 3 g Essigsäure, 170 g Titandioxid, 18 g Bleisilikat, 4,5 g Ruß und 170 g Wasser bis zu einer Kornfeinheit von < 7 »m vermahlen.

### Vernetzer 1

In ein Reaktionsgefäß wurden 263,4 g Toluylendiisocyanat, 85,2 g Toluol, 85,2 g Methylisobutylketon und 0,15 g Dibutylzinndilaurat eingewogen. Man tropfte innerhalb einer Stunde 67 g Trimethylolpropan in 57 g Toluol/Methylisobutylketon 1 : 1 zu und rührte 1 Stunde bei 20 bis 25°C. Anschließend wurde eine Mischung von 108,7 g Methylethylketoxim und 25,6 g Dimethylaminopropylamin zugegeben und bei 30 bis 40°C gerührt.

### Vernetzer 2

Man verfuhr wie bei Vernetzer 1 angegeben, verwendete aber statt der oben angegebenen Menge an Blockierungsmittel 117,5 g Methylethylketoxim und 15,3 g Dimethylaminopropylamin.

### Vernetzer 3

Man verfuhr wie bei Vernetzer 1 angegeben, verwendete aber statt Methylethylketoxim 143,75 g Methylisobutylketoxim.

### Vernetzer 4

In ein Reaktionsgefäß wurden 333,3 g Isophorondiisocyanat, 185 g Toluol, 185 g Methylethylketon und 0,15 g Dibutylzinndilaurat eingewogen. Man tropfte innerhalb einer Stunde 67 g Trimethylolpropan in 64 g Toluol/Methylethylketon 1 : 1 dazu und rührte bei 20°C eine Stunde nach. Anschließend gab man eine Mischung von 152,8 g 2,6-Dimethylpiperidin und 15,33 g Dimethylaminopropylamin zu und rührte so lange nach, bis der Isocyanatwert auf Null gefallen war.

### Vernetzer 5

Man verfuhr wie bei Vernetzer 3 angegeben, verwendete aber statt Dimethylaminopropylamin 25,8 g Dimethylaminopropanol.

### Vernetzer 6

Man verfuhr wie bei Vernetzer 1, gab aber statt des dort verwendeten Blockierungsmittels 142,1 g Dibutylamin und 40,9 g Dimethylaminopropylamin zu.

### Vernetzer 7

152 g Bisphenol A, 63 g eines Diglycidylethers von Bisphenol A mit einem Epoxidäquivalentgewicht von 189 und 0,1 g Tributylphosphin wurden 1 Stunde auf 160°C erhitzt. Nach dieser Zeit ließ sich kein Epoxid mehr nachweisen, und es war ein kettenverlängertes Diphenol entstanden. Dazu wurden 53,8 g Isopropanol, 129 g Di-n-butylamin, 31,5 g Paraformaldehyd und 17,6 g Isobutanol gegeben und 2 Stunden auf 80°C erhitzt. Das Produkt hatte einen Feststoffgehalt von 80 Gew.-%.

In ein Reaktionsgefäß wurden 222,2 g Isophorondiisocyanat, 94,1 g Toluol und 40,5 g Methylisobutylketon eingewogen. Bei 20 bis 25°C gab man 102,2 g Dimethylaminopropylamin zu und rührte 30 min nach.

143 g dieses Produktes gab man zu 509 g des in Stufe 1 hergestellten phenolischen Mannich-Vernetzers. Man rührte bei 50°C so lange, bis der Isocyanatwert auf Null gefallen war.

### Vernetzer 8

In ein Reaktionsgefäß wurden 222,2 g Isophorondiisocyanat, 94,1 g Toluol und 40,5 g Methylisobutylketon eingewogen. Bei 20 bis 25°C gab man 103,2 g Dimethylaminopropanol zu und rührte 30 min nach.

143 g dieses Produktes gab man zu 509 g des in Stufe 1 des Vernetzers 7 hergestellten phenolischen Mannich-Vernetzers. Man rührte bei 50°C so lange, bis der Isocyanatwert auf Null gefallen war.

### Vernetzer 9

In ein Reaktionsgefäß wurden 174 g Toluylendiisocyanat, 94,1 g Toluol und 40,5 g Methylisobutylketon eingewogen. Bei 20 bis 25°C gab man 103,2 g Dimethylaminopropanol zu und rührte 30 min nach.

124 g dieses Produktes wurden zu 509 g des in Stufe 1 des Vernetzers 7 hergestellten phenolischen Mannich-Vernetzers gegeben. Es wurde bei 50°C so lange gerührt, bis der Isocyanatwert auf Null gefallen war.

### Vernetzer 10

In ein Reaktionsgefäß wurden 375 g Diphenylmethandiisocyanat, 76 g Trimethylolpropan und 465 g Ethylglycolacetat eingewogen. Bei 50°C wurde gerührt, bis der NCO-Gehalt auf den theoretischen Wert abgefallen war. Dann wurden 168 g Dibutylamin und 20,6 g Dimethylaminopropanol zugegeben und 2 h bei 50°C gerührt. Anschließend wurde eine Mischung aus 9 g Eisessig, 27 g Wasser und 12,2 g Glycid zugegeben und 3 h bei 60°C gehalten.

### Vernetzer 11

In ein Reaktionsgefäß wurden 375 g Diphenylmethandiisocyanat, 76 g Trimethylolpropan und 300 g Ethylglycolacetat eingewogen. Bei 60°C wurde gerührt, bis der NCO-Gehalt auf den theoretischen Wert abgefallen war. Anschließend wurden bei 60°C 174,4 g Dibutylamin und 16 g Ethylthioethanol zugegeben und 2 h gerührt. Nach Verdünnen mit 166 g Butylglykol setzte man 6 g Eisessig, 18 g Wasser und 11,1 g Glycid zu und rührte weitere 3 h bei 60°C.

### Vernetzer 12

In ein Reaktionsgefäß wurden 86 g Phenylglycidether in 100 g Isopropanol eingewogen und bei 70°C mit einer Mischung aus 61 g Thiodiglykol, 30 g Eisessig und 18 g Wasser versetzt. Man rührte 4 h bei 70°C. Diese Lösung wurde zu 812 g einer 70 gew.%igen Lösung von mit Dibutylamin halbverkapptem Diphenylmethandiisocyanat gegeben und bei 60°C 4 h gerührt.

### Vernetzer 13

In ein Reaktionsgefäß wurden 375 g Diphenylmethandiisocyanat, 76 g Trimethylolpropan und 166 g Ethylglykolacetat eingewogen. Man rührte bei 50°C so lange, bis der NCO-Gehalt auf den theoretischen Wert abgesunken war. Dann wurden 155 g Dibutylamin zugegeben und 30 min nachgerührt. Anschließend gab man 22,2 g Glycid zu und rührte 3 h bei 50°C.

Zu dieser Vorstufe wurden 60,6 g Tributylphosphin, 18 g Eisessig und 54 g Wasser zugegeben und bei 50°C 2 h gerührt.

### Vernetzer 14

Man verwendete die Vorstufe des Vernetzers 13, addierte dann aber 30,3 g Triethylamin, 18 g Eisessig und 36 g Wasser.

### Vernetzer 15

Man verwendete die Vorstufe des Vernetzers 13, gab aber anschließend 38,3 g Thiodiglykol, 108 g Wasser und 18 g Eisessig dazu.

### Vernetzerdispersion 1

686,7 g des Vernetzers 1 mit einem Feststoffgehalt von 60 Gew.-% wurden mit 8,1 g Essigsäure versetzt. Anschließend gab man portionsweise unter Rühren 505,5 g Wasser zu und destillierte danach im Vakuum bei 40 bis 50°C unter Zulauf von 300 g Wasser ein Gemisch aus 300 g Lösemittel/Wasser ab. Man erhielt eine feinteilige, stabile Dispersion.

### Vernetzerdispersion 2

Man verfuhr wie unter Dispersion 1 beschrieben, verwendete aber 6,3 g Essigsäure.

### Vernetzerdispersion 3

Man verfuhr wie unter Dispersion 1 beschrieben und erhielt eine stabile, feinteilige Dispersion.

### Vernetzerdispersion 4

343,3 g des Vernetzers 4 mit einem Feststoffgehalt von 60 Gew.-% wurden mit 4,74 g Essigsäure versetzt. Anschließend gab man portionsweise unter Rühren 245,2 g Wasser zu. Man erhielt eine feinteilige Dispersion.

### Vernetzerdispersion 5

Man verfuhr wie unter Dispersion 4 beschrieben, gab aber 5,3 g Essigsäure zu.

### Vernetzerdispersion 6

Man verfuhr wie unter Dispersion 1 beschrieben und erhielt ebenfalls eine stabile, feinteilige Dispersion.

### Vernetzerdispersion 7

294 g des Vernetzers 7 mit einem Feststoffgehalt von 70 Gew.-% wurden mit 29,4 g Isobutanol versetzt. Anschließend gab man 7,4 g Essigsäure zu und dispergierte unter Rühren mit 265 g Wasser. Danach destillierte man im Vakuum unter Zulauf von 100 g Wasser eine Mischung aus Lösemittel und Wasser (200 g) ab. Es resultierte eine feinteilige, stabile, gut filtrierbare Dispersion.

### Vernetzerdispersion 8

Man verfuhr wie unter Vernetzerdispersion 7 beschrieben, verwendete aber den Vernetzer 8.

### Vernetzerdispersion 9

294 g des Vernetzers 9 mit einem Feststoffgehalt von 70 Gew.-% wurden mit 60 g Isobutanol versetzt. Man gab 4,5 g Essigsäure zu und dispergierte unter Rühren mit 265 g Wasser. Man erhielt eine feinteilige, stabile Dispersion.

### Vernetzerdispersion 10

1130 g des Vernetzers 10 wurden mit 56 g Butylglykol versetzt und in 894 g Wasser dispergiert. Anschließend destillierte man im Vakuum 400 g Lösemittel/Wasser-Gemisch ab.

### Elektrotauchbad 1

Es wurden 1061,7 g der Bindemitteldispersion, 775 g der Pigmentpaste und 926 g der Vernetzerdispersion 4 gemischt und mit Wasser auf einen Feststoffgehalt von 20 Gew.-% aufgefüllt. Man erhielt bei 300 V Abscheidungen mit einer Schichtdicke von 20 »m. Die Schicht konnte bei einer Einbrenntemperatur von 140°C vernetzt werden.

### Elektrotauchbad 2

Das Tauchbad wurde wie Tauchbad 1 angesetzt, man verwendete aber die Vernetzerdispersion 2. Nach Zugabe von 30 g Napsol® PPH (Fa. SHELL) und Alterung von 7 Tagen erhielt man folgende Abscheidungen:
Abscheidespannung: 300 V
Schichtdicke: 23 bis 25 »m.

Die abgeschiedenen Filme waren nach dem Einbrennen bei 120°C acetonfest und zeigten einen sehr guten Verlauf und einen hervorragenden Korrosionsschutz.

### Elektrotauchbad 3

Man verfuhr wie unter Elektrotauchbad 1 beschrieben unter Verwendung folgender Einsatzstoffe:
1061,7 g Kunstharzbindemittel-Dispersion
775 g Pigmentpaste
902 g Vernetzerdispersion 1
Dem Bad wurden 30 g/l Napsol zugesetzt. Nach der Alterung von 7 Tagen erhielt man folgende Werte:
Abscheidespannung: 320 V
Schichtdicke: 18 »m
Die Filme waren nach dem Einbrennen bei 120°C/20 min lösemittelfest und zeigten einen guten Verlauf und hervorragenden Korrosionsschutz. Das Bad war über Wochen stabil und zeigte selbst nach mehrwöchiger Lagerung keine Neigung zum Absetzen oder Koagulieren.

### Elektrotauchbad 4

Man verfuhr wie unter Tauchbad 3 beschrieben, verwendete aber die Vernetzerdispersion 2
Die Abscheidung nach Alterung gab folgende Werte:
Abscheidespannung: 350 V
Schichtdicke: 19 »m.

Die Filme zeigten einen befriedigenden Verlauf und Lösemittelfestigkeit bei einer Härtungstemperatur von 120°C.

### Elektrotauchbad 5

Aus 1370 g Kunstharzbindemittel-Dispersion, 775 g Pigmentpaste und 595 g Vernetzerdispersion 8 wurde, wie unter Tauchbad 1 beschrieben, ein Bad angesetzt. Nach Zugabe von 20 g Napsol PPH pro l erhielt man nach 7 Tagen Alterung folgende Werte: Die Abscheidespannung betrug 280 V, man erhielt Schichtdicken von 22 »m und Lösemittelfestigkeit bei 140°C Einbrenntemperatur. Nach 4 Wochen Alterung zeigten die Bäder keine Veränderung in ihren Eigenschaften.

### Elektrotauchbad 6

Mit der Vernetzerdispersion 9 stellte man, wie unter Tauchbad 5 beschrieben, ein Bad her. Nach Zugabe von 25 g/l Napsol PPH und Alterung von 7 Tagen erreichte man eine Abscheidespannung von 300 V, eine Schichtdicke von 23 »m und Lösemittelfestigkeit bei 140°C Einbrenntemperatur. Nach weiteren 4 Wochen Alterung zeigten die Bäder keine Neigung zum Absetzen oder Koagulieren und die abgeschiedenen Filme waren gegenüber der ersten Abscheidung unverändert.

## Patentansprüche (Patentansprüche für folgende(n) Vertragsstaat(en): AT, BE, CH, DE, FR, GB, IT, LI, NL, SE)

1. Hitzehärtbares, kathodisch abscheidbares wäßriges Elektrotauchlack-Überzugsmittel, enthaltend
(A) 50 bis 95 Gew.-% eines durch Protonieren mit Säure wasserverdünnbaren Polymerisations-, Polykondensations- oder Polyadditionsproduktes mit einem mittleren- Molekulargewicht von 200 bis 20 000 mit primären und/oder sekundären Hydroxylgruppen und primären, sekundären und/oder tertiären Aminogruppen und
(B) 5 bis 50 Gew.-% eines wasserverdünnbaren Vernetzers mit einer tertiären Aminogruppe, einer quartären Ammoniumgruppe, einer Phosphoniumgruppe oder einer Sulfoniumgruppe, ausgenommen phenolische Mannichbasen mit freien phenolischen Hydroxylgruppen aus einem Phenol, Formaldehyd und einem sekundären aliphatischen Amin.

2. Überzugsmittel nach Anspruch 1, enthaltend ein Amino-Epoxidharz als Komponente (A).

3. Überzugsmittel nach Anspruch 1 oder 2, enthaltend ein blokkiertes Polyisocyanat als Vernetzer (B).

4. Überzugsmittel nach einem der Ansprüche 1 bis 3, enthaltend zusätzlich in einer Menge bis zu 20 Gew.-%, bezogen auf das Gesamtgewicht des Überzugsmittels, organische Lösungsmittel.

5. Überzugsmittel nach einem der Ansprüche 1 bis 4, enthaltend zusätzlich Pigmente, Füllstoffe und Lackhilfsmittel.

6. Verfahren zur Herstellung eines hitzehärtbaren, kathodisch abscheidbaren Elektrotauchlack-Überzugsmittels, dadurch gekennzeichnet, daß man die Komponenten
(A) 50 bis 95 Gew.-% eines durch Protonieren mit Säure wasserverdünnbaren Polymerisations-, Polykondensations- oder Polyadditionsproduktes mit einem mittleren Molekulargewicht von 200 bis 20 000 mit primären und/oder sekundären Hydroxylgruppen und primären, sekundären und/oder tertiären Aminogruppen und
(B) 5 bis 50 Gew.-% eines wasserverdünnbaren Vernetzers mit kationischen Gruppen oder mit Gruppen, die durch Protonieren mit Säure in kationische Gruppen überführt werden können,
jeweils getrennt voneinander in Wasser dispergiert und die beiden Dispersionen zur Herstellung des Elektrotauchlack-Überzugsmittel mischt.

7. Überzugsmittel, erhältlich nach dem Verfahren gemäß Anspruch 6.

8. Verfahren zur Herstellung von Überzügen durch kathodische Elektrotauchlackierung, dadurch gekennzeichnet, daß als Elektrotauchbad ein Überzugsmittel gemäß einem der Ansprüche 1 bis 7 verwendet wird.

9. Mit einem Überzug versehener Gegenstand, erhältlich unter Verwendung eines Überzugsmittels gemäß einem der Ansprüche 1 bis 7.

## Patentansprüche (Patentansprüche für folgende(n) Vertragsstaat(en): ES)

1. Verfahren zur Herstellung eines hitzehärtbaren, kathodisch abscheidbaren wäßrigen Elektrotauchlack-überzugsmittels, dadurch gekennzeichnet, daß man eine Mischung aus
(A) 50 bis 95 Gew.-% eines durch Protonieren mit Säure wasserverdünnbaren Polymerisations-, Polykondensations- oder Polyadditionsproduktes mit einem mittleren Molekulargewicht von 200 bis 20 000 mit primären und/oder sekundären Hydroxylgruppen und primären, sekundären und/oder tertiären Aminogruppen und
(B) 5 bis 50 Gew.-% eines wasserverdünnbaren Vernetzers mit einer tertiären Aminogruppe, einer quartären Ammoniumgruppe, einer Phosphoniumgruppe oder einer Sulfoniumgruppe, ausgenommen phenolische Mannichbasen mit freien phenolischen Hydroxylgruppen aus einem Phenol, Formaldehyd und einem sekundären aliphatischen Amin,
verwendet.

2. Verfahren zur Herstellung eines überzugsmittels nach Anspruch 1, dadurch gekennzeichnet, daß man ein Amino-Epoxidharz als Komponente (A) verwendet.

3. Verfahren zur Herstellung eines überzugsmittels nach Anspruch 1 oder 2, dadurch gekennzeichnet, daß man ein blockiertes Polyisocyanat als Vernetzer (B) verwendet.

4. Verfahren zur Herstellung eines überzugsmittels nach einem der Ansprüche 1 bis 6, dadurch gekennzeichnet, daß man zusätzlich in einer Menge bis zu 20 Gew.-%, bezogen auf das Gesamtgewicht des überzugsmittels, organische Lösungsmittel verwendet.

5. Verfahren zur Herstellung eines Überzugsmittels nach einem der Ansprüche 1 bis 4, dadurch gekennzeichnet, daß man zusätzlich Pigmente, Füllstoffe und Lackhilfsmittel verwendet.

6. Verfahren zur Herstellung eines hitzehärtbaren, kathodisch abscheidbaren Elektrotauchlack-Überzugsmittels, dadurch gekennzeichnet, daß man die Komponenten
(A) 50 bis 95 Gew.-% eines durch Protonieren mit Säure wasserverdünnbaren Polymerisations-, Polykondensations- oder Polyadditionsproduktes mit einem mittleren Molekulargewicht von 200 bis 20 000 min primären und/oder sekundären Hydroxylgruppen und primären, sekundären und/oder tertiären Aminogruppen und
(B) 5 bis 50 Gew.-% eines wasserverdünnbaren Vernetzers mit kationischen Gruppen oder mit Gruppen, die durch Protonieren mit Säure in kationische Gruppen überführt werden können,
jeweils getrennt voneinander in Wasser dispergiert und die beiden Dispersionen zur Herstellung des Elektrotauchlack-Überzugsmittels mischt.

7. Verfahren zur Herstellung von Überzügen durch kathodische Elektrotauchlackierung, dadurch gekennzeichnet, daß als Elektrotauchbad ein Überzugsmittel gemäß einem der Ansprüche 1 bis 6 verwendet wird.

8. Verfahren zur Herstellung eines mit einem Überzug versehenen Gegenstandes, dadurch gekennzeichnet, daß man ein Überzugsmittel gemäß einem der Ansprüche 1 bis 6 verwendet.

## Claims (Claims for the following Contracting State(s): AT, BE, CH, DE, FR, GB, IT, LI, NL, SE)

1. Heat-curable, cathodically depositable aqueous electrocoating composition, containing
(A) from 50 to 95% by weight of a polymerization, polycondensation or polyaddition product which has an average molecular weight of from 200 to 20,000 and primary and/or secondary hydroxyl groups and primary, secondary and/or tertiary amino groups and is water-thinnable on protonation with an acid, and
(B) from 5 to 50% by weight of a water-thinnable cross-linking agent having a tertiary amino group, a quaternary ammonium group, a phosphonium group, or a sulphonium group, excluding phenolic Mannich bases having free phenolic hydroxyl groups from a phenol, formaldehyde and a secondary aliphatic amine.

2. Coating composition according to Claim 1, containing an aminoepoxy resin as component (A).

3. Coating composition according to Claim 1 or 2, containing a blocked polyisocyanate as crosslinking agent (B).

4. Coating composition according to any of Claims 1 to 3, containing in addition an organic solvent in an amount of up to 20% by weight based on the total weight of the coating composition.

5. Coating composition according to any of Claims 1 to 4, containing in addition pigments, fillers and auxiliaries.

6. Process for preparing a heat-curable, cathodically depositable electrocoating composition, characterized in that the components
(A) from 50 to 95% by weight of a polymerization, polycondensation or polyaddition product which has an average molecular weight of from 200 to 20,000 and primary and/or secondary hydroxyl groups and primary, secondary and/or tertiary amino groups and is water-thinnable on protonation with an acid, and
(B) from 5 to 50% by weight of a water-thinnable cross-linking agent having cationic groups or groups which are convertible into cationic groups by protonation with an acid,
are each separately dispersed in water and the two dispersions are mixed to produce the electrocoating composition.

7. Coating composition obtainable by the process according to Claim 6.

8. Process for preparing a cathodic electrocoating, characterized in that a coating composition according to any of Claims 1 to 7 is used as electrocoating bath.

9. Coated article, obtainable using a coating composition according to any of Claims 1 to 7.

## Claims (Claims for the following Contracting State(s): ES)

1. Process for preparing a heat-curable, cathodically depositable aqueous electrocoating composition, characterized in that a mixture comprising
(A) from 50 to 95% by weight of a polymerization, polycondensation or polyaddition product which has an average molecular weight of from 200 to 20,000 and primary and/or secondary hydroxyl groups and primary, secondary and/or tertiary amino groups and is water-thinnable on protonation with an acid, and
(B) from 5 to 50% by weight of a water-thinnable cross-linking agent is used having a tertiary amino group, a quaternary ammonium group, a phosphonium group, or a sulphonium group, excluding phenolic Mannich bases having free phenolic hydroxyl groups from a phenol, formaldehyde and a secondary aliphatic amine.

2. Process for preparing a coating composition according to Claim 1, characterized in that an aminoepoxy resin is used as component (A).

3. Process for preparing a coating composition according to Claim 1 or 2, characterized in that a blocked polyisocyanate is used as crosslinking agent (B).

4. Process for preparing a coating composition according to any of Claims 1 to 6, characterized in that in addition an organic solvent is used in an amount of up to 20 % by weight based on the total weight of the coating composition.

5. Process for preparing a coating composition according to any of Claims 1 to 4, characterized in that in addition pigments, fillers and auxiliaries are used.

6. Process for preparing a heat-curable, cathodically depositable electrocoating composition, characterized in that the components
(A) from 50 to 95% by weight of a polymerization, polycondensation or polyaddition product which has an average molecular weight of from 200 to 20,000 and primary and/or secondary hydroxyl groups and primary, secondary and/or tertiary amino groups and is water-thinnable on protonation with an acid, and
(B) from 5 to 50% by weight of a water-thinnable cross-linking agent having cationic groups or groups which are convertible into cationic groups by protonation with an acid,
are each separately dispersed in water and the two dispersions are mixed to produce the electrocoating composition.

7. Process for preparing a cathodic electrocoating, characterized in that a coating composition according to any of Claims 1 to 6 is used as electrocoating bath.

8. Process for preparing a coated article, characterized in that a coating composition according to any of Claims 1 to 6 is used.

## Revendications (Revendications pour l'(les) Etat(s) contractant(s) suivant(s): AT, BE, CH, DE, FR, GB, IT, LI, NL, SE)

1. Agent aqueux de revêtement de vernis pour électrodéposition, déposable cathodiquement, thermodurcissable, contenant
(A) de 50 à 95 % en poids d'un produit de polymérisation, de polycondensation ou de polyaddition diluable à l'eau par une protonation à l'acide, ayant un poids moléculaire moyen de 200 à 20 000, ayant des groupements hydroxyles primaires et/ou secondaires et des groupements amino primaires, secondaires et/ou tertiaires et
(B) de 5 à 50 % en poids d'un agent de réticulation diluable à l'eau ayant un groupement amino tertiaire, un groupement ammonium quaternaire, un groupement phosphonium ou un groupement sulfonium, à l'exception des bases de Mannich phénoliques ayant des groupements hydroxyles phénoliques libres en provenance d'un phénol, de formaldéhyde et d'une amine aliphatique secondaire.

2. Agent de revêtement selon la revendication 1, contenant en tant que composant (A) une résine amino-époxyde.

3. Agent de revêtement selon la revendication 1 ou 2, comprenant en tant qu'agent de réticulation (B) un polyisocyanate bloqué.

4. Agent de revêtement selon l'une quelconque des revendications 1 à 3, comprenant en outre des solvants organiques dans une quantité allant jusqu'à 20 % en poids, par rapport au poids total de l'agent de revêtement.

5. Agent de revêtement selon l'une quelconque des revendications 1 à 4, comprenant en outre des pigments, des charges, et des agents auxiliaires de vernissage.

6. Procédé de préparation d'un agent de revêtement de vernis pour électrodéposition, déposable cathodiquement, thermodurcissable, caractérisé en ce que l'on procède à chaque fois à la dispersion dans l'eau de manière séparée des composants
(A) de 50 à 95 % en poids d'un produit de polymérisation, de polycondensation ou de polyaddition diluable à l'eau par une protonation à l'acide, ayant un poids moléculaire moyen de 200 à 20 000, ayant des groupements hydroxyles primaires et/ou secondaires et des groupements amino primaires, secondaires et/ou tertiaires et
(B) de 5 à 50 % en poids d'un agent de réticulation diluable à l'eau ayant des groupements cationiques ou des groupements, qui peuvent être convertis par une protonation à l'acide en groupements cationiques,
et en ce que l'on mélange les deux dispersions en vue de la préparation de l'agent de revêtement de vernis pour électrodéposition.

7. Agent de revêtement, disponible conformément au procédé selon la revendication 6.

8. Procédé de préparation de revêtements par vernissage par électrodéposition cathodique, caractérisé en ce que l'on utilise en tant que bain d'électrodéposition un agent de revêtement selon l'une quelconque des revendications 1 à 7.

9. Article pourvu d'un revêtement, disponible par l'utilisation d'un agent de revêtement selon l'une quelconque des revendications 1 à 7.

## Revendications (Revendications pour l'(les) Etat(s) contractant(s) suivant(s): ES)

1. Procédé de préparation d'un agent aqueux de revêtement de vernis pour électrodéposition, déposable cathodiquement, thermodurcissable, caractérisé en ce que l'on utilise un mélange
(A) de 50 à 95 % en poids d'un produit de polymérisation, de polycondensation ou de polyaddition diluable à l'eau par une protonation à l'acide, ayant un poids moléculaire moyen de 200 à 20 000, ayant des groupements hydroxyles primaires et/ou secondaires et des groupements amino primaires, secondaires et/ou tertiaires et
(B) de 5 à 50 % en poids d'un agent de réticulation diluable à l'eau ayant un groupement amino tertiaire, un groupement ammonium quaternaire, un groupement phosphonium ou un groupement sulfonium, à l'exception des bases de Mannich phénoliques ayant des groupements hydroxyles phénoliques libres en provenance d'un phénol, de formaldéhyde et d'une amine aliphatique secondaire.

2. Procédé de préparation d'un agent de revêtement selon la revendication 1, caractérisé en ce que l'on utilise en tant que composant (A) une résine amino-époxyde.

3. Procédé de préparation d'un agent de revêtement selon la revendication 1 ou 2, caractérisé en ce que l'on utilise en tant qu'agent de réticulation (B) un polyisocyanate bloqué.

4. Procédé de préparation d'un agent de revêtement selon l'une quelconque des revendications 1 à 3, caractérisé en ce que l'on utilise en outre des solvants organiques dans une quantité allant jusqu'à 20 % en poids, par rapport au poids total de l'agent de revêtement.

5. Procédé de préparation d'un agent de revêtement selon l'une quelconque des revendications 1 à 4, caractérisé en ce que l'on utilise en outre des pigments, des charges, et des agents auxiliaires de vernissage.

6. Procédé de préparation d'un agent de revêtement de vernis pour électrodéposition, déposable cathodiquement, thermodurcissable, caractérisé en ce que l'on procède à chaque fois à la dispersion dans l'eau de manière séparée des composants
(A) de 50 à 95 % en poids d'un produit de polymérisation, de polycondensation ou de polyaddition diluable à l'eau par une protonation à l'acide, ayant un poids moléculaire moyen de 200 à 20 000, ayant des groupements hydroxyles primaires et/ou secondaires et des groupements amino primaires, secondaires et/ou tertiaires et
(B) de 5 à 50 % en poids d'un agent de réticulation diluable à l'eau ayant des groupements cationiques ou des groupements, qui peuvent être convertis par une protonation à l'acide en groupements cationiques,
et en ce que l'on mélange les deux dispersions en vue de la préparation de l'agent de revêtement de vernis pour électrodéposition.

7. Procédé de préparation de revêtements par électrodéposition cathodique, caractérisé en ce que l'on utilise en tant que bain d'électrodéposition un agent de revêtement selon l'une quelconque des revendications 1 à 6.

8. Procédé de préparation d'un article pourvu d'un revêtement, caractérisé en ce que l'on utilise un agent de revêtement selon l'une quelconque des revendications 1 à 6.
